# EUROPEAN PATENT APPLICATION

(11) **EP 3 018 739 A1**
(43) Date of publication of application: **11.05.2016**
(21) Application number: 15201764.6
(22) Date of filing: 22.02.2012
(51) Int. Cl.: H01M 4/505, H01M 4/525, H01M 10/39, H01M 4/485, H01M 2/02, H01M 2/04, H01M 2/16, H01M 2/14, H01M 4/38, H01M 4/587, H01M 10/04

(54) **MOLTEN SALT BATTERY**

(30) Priority: 02.03.2011 JP 2011045693
(62) Divisional of application: 12752318.1
(71) Applicant: Sumitomo Electric Industries, Ltd., Osaka-shi, Osaka 541 (JP); Kyoto University, Kyoto-shi, Kyoto 606-8501 (JP)
(72) Inventor: NITTA, Koji, Osaka-shi, Osaka 554-0024 (JP); INAZAWA, Shinji, Osaka-shi, Osaka 554-0024 (JP); SAKAI, Shoichiro, Osaka-shi, Osaka 554-0024 (JP); FUKUNAGA, Atsushi, Osaka-shi, Osaka 554-0024 (JP); NOHIRA, Toshiyuki, Kyoto-shi, Kyoto 606-8501 (JP); HAGIWARA, Rika, Kyoto-shi, Kyoto 606-8501 (JP)
(74) Representative: Boult Wade Tennant

(57) **Abstract**

A molten salt battery comprising a battery case, a positive electrode, a separator, a negative electrode and a molten salt as an electrolyte, the positive electrode, the negative electrode and the separator being impregnated with the molten salt, wherein:
the molten salt contains an anion having a chemical structure represented by a following formula (1): 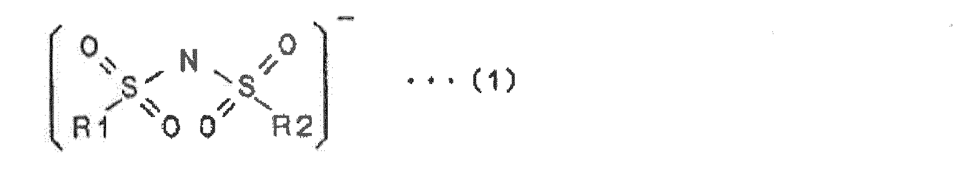 wherein in the formula (1) R1 and R2 are a fluoro group;
as cations, Na ion and K ion;
the molten salt is a mixed salt between NaFSA in which the cation is Na ion and the anion is FSA ion, and KFSA in which the cation is K ion and the anion is FSA ion, FSA ion being bis(fluorosulfonyl)amide ion; and
the positive electrode contains, as active material, a metal oxide represented by a composition formula: NaₓM1_{y}M2_{1-y}O₂, wherein M1 is Fe or Ni, M2 is Mn or Ti, x is a number satisfying 0 < x ≤ 1 and y is a number satisfying 0 < y < 1,
characterised in that:
the battery case is provided with an elastic body; and when the positive electrode or the negative electrode is expanded or shrunk due to charge and discharge, the change in the volume of the positive electrode or the negative electrode is absorbed by expansion and contraction of the elastic body.

## Description

### TECHNICAL FIELD

The present invention relates to a molten salt battery containing a molten salt as an electrolyte.

### BACKGROUND ART

In order to effectively utilize electric power, storage batteries having high energy density and high efficiency are required. As such storage batteries, lithium-ion secondary batteries are widely used. Because the quantity of Li (lithium) resources is poor, storage batteries containing Na (sodium), which is more abundant in nature than Li, have been developed. As an example of such batteries, Patent Document 1 discloses a sodium-sulfur battery. Non-Patent Document 1 also discloses a positive electrode material assuming the use thereof for sodium-ion secondary batteries.

However, the operation of the sodium-sulfur battery disclosed in Patent Document 1 requires a high temperature of 280°C or more. Due to this, the sodium-sulfur battery requires a lot of time in order to reach the operation temperature thereof. The sodium-ion secondary battery disclosed in Non-Patent Document 1 utilizes, similar to lithium-ion secondary batteries, an electrolyte solution which is a flammable organic solvent. However, when an organic solvent is used as an electrolyte solution for batteries, the electrolyte is decomposed in parallel with battery reaction at a voltage within the range of battery operation, causing deterioration of batteries. Moreover, organic solvents are volatile and flammable. Thus batteries using organic solvent electrolytes may be ignited due to heat generation.

### PRIOR ART DOCUMENT

### Patent Document

Patent Document 1: Japanese Laid-Open Patent Publication No. 2007-273297

### Non Patent Document

Non-Patent Document 1: Jun-ichi Iwatate, Naoaki Yabu-uchi, Shin-ichi Komaba, "Synthesis of laminated NaMO2 (M = Fe, Mn, Ti) and Electrochemical property", Abstract of The 51st Battery Symposium in Japan, The Committee of Battery Technology, The Electrochemical Society of Japan, November 2010, p.225

### SUMMARY OF THE INVENTION

### Problems that the Invention is to Solve

An object of the present invention is to provide a molten salt battery which has a reduced time before initiation of operation and is highly safe because of the use of a nonflammable molten salt having a low melting point.

### Means for Solving the Problems

In order to achieve the above object, the first aspect of the present invention is a molten salt battery comprising a positive electrode, a negative electrode and a molten salt as an electrolyte, wherein the molten salt contains an anion having a chemical structure represented by the following formula (1): 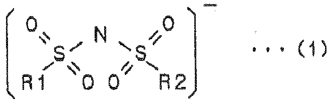 (wherein in the formula (1) R1 and R2 are the same or different and are respectively a fluoro group or a fluoroalkyl group); and, as cations, Na ion and an alkali metal ion other than Na ion or an alkaline earth metal ion, and the positive electrode contains, an active material, a metal oxide represented by a composition formula: NaₓM1_{y}M2_{1-y}O₂ (wherein M1 is Fe or Ni, M2 is Mn or Ti, x is a number satisfying 0 < x ≤ 1 and y is a number satisfying 0 < y < 1).

In the molten salt battery, it is preferred that in the formula (1), R1 and R2 are respectively a fluoro group or a fluoroalkyl group having 1 to 8 carbon atoms.

In the molten salt battery, the anion contained in the molten salt is preferably FSA (bis(fluorosulfonyl)amide) ion, TFSA (bis(trifluoromethylsulfonyl)amide) ion or FTA (fluoro(trifluoromethylsulfonyl)amide) ion.

In the molten salt battery, the cations contained in the molten salt are preferably Na ion and K ion.

In the molten salt battery, the molten salt is preferably a mixed salt between NaFSA in which the cation is Na ion and the anion is FSA ion; and KFSA in which the cation is K ion and the anion is FSA ion.

According to the present invention, the molten salt used as the electrolyte in the molten salt battery is a mixed salt between a salt in which the anion is the ion represented by the formula (1) and the cation is Na ion, and a salt in which the cation is an alkali metal ion other than Na ion or an alkaline earth metal ion. The active material of the positive electrode of the molten salt battery is a metal oxide represented by NaₓM1_{y}M2_{1-y}O₂ (wherein M1 is Fe or Ni, M2 is Mn orTi, 0 < x ≤ 1 and 0 < y < 1). In this case, the molten salt, which is the mixed salt, thus has a reduced melting point and the molten salt battery has a reduced operation temperature.

In the molten salt battery, the metal oxide is preferably a metal oxide represented by a composition formula: Na_{2/3}Fe_{1/3}Mn_{2/3}O₂, Na_{5/6}Fe_{1/2}Mn_{1/2}O₂, NaFe_{1/2}Ti_{1/2}O₂ or NaNi_{1/2}Mn_{1/2}O₂.

According to this configuration, the active material of the positive electrode is Na_{2/3}Fe_{1/3}Mn_{2/3}O₂, Na_{5/6}Fe_{1/2}Mn_{1/2}O₂, NaFe_{1/2}Ti_{1/2}O₂ or NaNi_{1/2}Mn_{1/2}O₂, so that the molten salt battery can be provided with a high energy density.

The molten salt battery preferably comprises a separator provided between the positive and negative electrodes, and the separator is formed of a silicate glass or a resin.

In the molten salt battery, the separator is preferably formed of a glass cloth or a porous resin.

In the molten salt battery, the negative electrode preferably contains, as an active material, tin, metal Na, carbon, silicon or indium.

The molten salt battery preferably comprises a container formed of aluminum and configured to retain the positive and negative electrodes.

### BRIEF DESCRIPTION OF THE DRAWINGS

Fig. 1 is a vertical section diagram schematically showing an embodiment of the molten salt battery of the present invention;
Fig. 2 is a characteristic diagram showing measurement results of the produced Na_{2/3}Fe_{1/3}Mn_{2/3}O₂ by XRD;
Fig. 3 is a characteristic diagram showing charge and discharge characteristics of the molten salt battery containing Na_{2/3}Fe_{1/3}Mn_{2/3}O₂ as a positive electrode active material; and
Fig. 4 shows tables indicating the conditions for preparation and conditions and results for charge-discharge test of the molten salt battery of Example 1.

### MODES FOR CARRYING OUT THE INVENTION

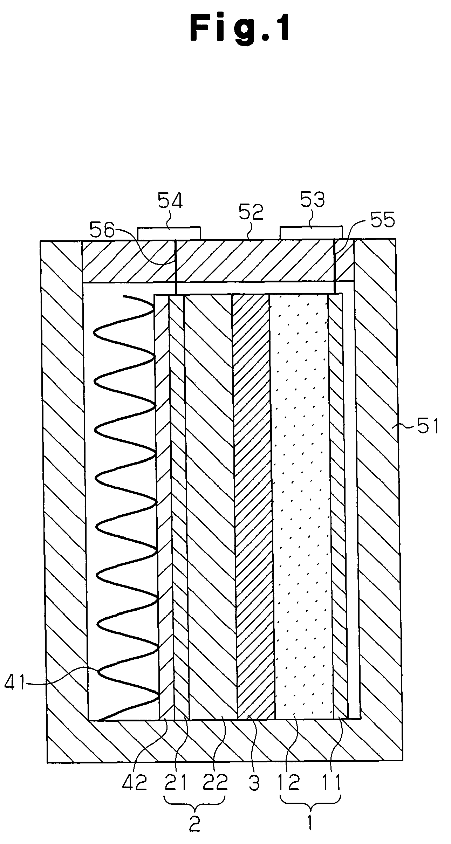

A specified embodiment of the molten salt battery of the present invention is hereinafter illustrated by referring to Figs. 1 to 4.

As shown in Fig. 1, the molten salt battery comprises a battery case 51, a rectangular plate-shaped positive electrode 1, a sheet-shaped separator 3, a rectangular plate-shaped negative electrode 2 and a lid 52. The battery case 51 has a rectangular solid box shape with an opening at the top face. The positive electrode 1, the separator 3 and the negative electrode 2 are aligned in the battery case 51. The lid 52 is attached to the battery case 51 so as to cover the opening of the battery case 51. The battery case 51 and the lid 52 are formed of Al (aluminum). The separator 3 is provided between the positive electrode 1 and the negative electrode 2. The positive electrode 1, the separator 3 and the negative electrode 2 are stacked and arranged so as to be perpendicular to the bottom face of the battery case 51.

A spring 41 and a presser plate 42 are provided between the negative electrode 2 and an inner wall of the battery case 51. The spring is formed of an Al alloy and has a corrugated sheet shape. The presser plate 42 is non-flexible and has a flat plate shape. The spring 41 energizes the presser plate 42 so as to press the negative electrode 2 towards the separator 3 and the positive electrode 1. The positive electrode 1 is pressed towards the separator 3 and the negative electrode 2 from an inner wall at the opposite side of the spring 41 due to reaction of the spring 41. The spring 41 is not limited to a metal spring and may be an elastic body such as rubbers. When the positive electrode 1 or the negative electrode 2 is expanded or shrunk due to charge and discharge, the change in the volume of the positive electrode 1 or the negative electrode 2 is absorbed by expansion and contraction of the spring 41.

The positive electrode 1 is formed by a positive electrode current collector 11 and a positive electrode material 12. The positive electrode current collector 11 is formed of Al and has a rectangular plate shape. The positive electrode material 12 contains a positive electrode active material and a binder described hereinafter and is applied on the positive electrode current collector 11. The negative electrode 2 is formed by a negative electrode current collector 21 and a negative electrode material 22. The negative electrode current collector 21 is formed of Al and has a rectangular plate shape. The negative electrode material 22 contains a negative electrode active material such as Sn (tin) and the like and is plated on the negative electrode current collector 21. Zinc is plated on a substrate as zincate treatment and then Sn is plated upon plating of the negative electrode material 22 on the negative electrode current collector 21. The negative electrode active material is not limited to Sn and may be metal Na, carbon, silicon or indium. The negative electrode material 22 may alternatively be formed by applying negative electrode active material powder containing a binding agent on the negative electrode current collector 21. The separator 3 is formed of an insulating material such as a silicate glass or a resin. The separator 3 has a shape that allows retention of an electrolyte and passage of Na ions. The separator 3 is formed of a glass cloth or a porous resin.

The separator 3 is provided between the positive electrode 1 and the negative electrode 2 which are arranged so that the positive electrode material 12 opposes to the negative electrode material 22. The positive electrode 1, the negative electrode 2 and the separator 3 are impregnated with an electrolyte containing a molten salt. The inner face of the battery case 51 is covered with an insulating resin in order to avoid short circuit between the positive electrode 1 and the negative electrode 2. The outer face of the lid 52 is provided with a positive electrode terminal 53 and a negative electrode terminal 54 as external connection terminals. The positive electrode terminal 53 and the negative electrode terminal 54 are insulated from each other. A part of the lid 52 that faces the inside of the battery case 51 is also covered with an insulating film or the like. The upper end of the positive electrode current collector 11 is connected to the positive electrode terminal 53 via a lead wire 55. The upper end of the negative electrode current collector 21 is connected to the negative electrode terminal 54 via a lead wire 56. The lead wires 55 and 56 are insulated from the lid 52. The lid 52 is welded to the battery case 51.

The electrolyte is a molten salt which becomes conductive liquid in the molten state thereof. The molten salt melts at or higher than a melting point to become an electrolyte solution, Accordingly the molten salt battery operates as a secondary battery. The molten salt battery may be internally provided with a heater for heating the inside of the molten battery or a temperature sensor. The molten salt battery shown in Fig. 1 comprises each one of the positive electrode 1 and negative electrode 2; however multiple positive electrodes 1 and negative electrodes 2 may be alternately stacked so as to sandwich separators 3. The molten salt battery may have a cylindrical shape other than the rectangular solid shape.

The composition of the molten salt used as an electrolyte for the molten salt battery is now described.

The anion contained in the molten salt has a chemical structure represented by the above formula (1). In the formula (1), R1 and R2 are respectively a fluoro group or a fluoroalkyl group. R1 and R2 may be the same or different. The anion represented by the formula (1) is preferably the one wherein R1 and R2 are respectively a fluoro group or a fluoroalkyl group having 1 to 8 carbon atoms. When R1 and R2 are both fluoro groups, the anion represented by the formula (1) is FSA (bis(fluorosulfonyl)amide) ion. When R1 and R2 are both trifluoromethyl groups, the anion represented by the formula (1) is TFSA (bis(trifluoromethylsulfonyl)amide) ion. When one of R1 and R2 is a fluoro group and the other is a trifluoromethyl group, the anion represented by the formula (1) is FTA (fluoro(trifluoromethylsulfonyl)amide) ion. The anion contained in the molten salt may include FSA ion, TFSA ion or FTA ion.

The molten salt also contains Na ion as a cation. The molten salt also contains at least one alkali metal ion other than Na ion or alkaline earth metal ion. The alkali metal ion other than Na ion which can be used is Li, K (potassium), Rb (rubidium) or Cs (cesium) ion. The alkaline earth metal ion which can be used is Be (berylium), magnesium (Mg), Ca (calcium), Sr (strontium) or Ba (barium) ion. For example, the cations contained in the molten salt may be Na ion and K ion. The molten salt in which the anion is FSA ion and the cation is Na ion and K ion is a mixed salt between NaFSA in which the cation is Na ion and the anion is FSA ion and KFSA in which the cation is K ion and the anion is FSA ion.

As described above, the molten salt used as an electrolyte in the molten salt battery of the present invention contains the anion represented by the formula (1) and a cation which is an alkali metal ion or an alkaline earth metal ion. The previous studies have shown that the melting point of the molten salt having such a composition is significantly lower than 280 to 360°C, which is the operation temperature of sodium-sulfur batteries. The molten salt used as an electrolyte for the molten salt battery of the present invention is a mixed salt containing multiple kinds of salts, thereby having a lower melting point than a molten salt formed of a single salt. Namely the molten salt used as an electrolyte for the molten salt battery of the present invention has a significantly lower melting point than 280 to 360°C, at which sodium-sulfur batteries operate. Accordingly the molten salt battery of the present invention can have a significantly lower operation temperature than that of sodium-sulfur batteries.

The composition of the positive electrode material 12 is now described. The positive electrode active material contained in the positive electrode material 11 is a metal oxide represented by the following formula (2).

NaₓM1_{y}M2_{1-y}O₂ (2)

In the formula (2), M1 is a metal element of either Fe (iron) or Ni (nickel). M2 is a metal element of either Mn (manganese) or Ti (titanium), x is a number in the range of 0 < x ≤ 1 and y is a number in the range of 0 < y < 1. In Non-Patent Document 1, an electrolyte solution containing a flammable organic solvent, propylene carbonate, is used. The inventor of the present application found that, according to his research, the metal oxide represented by the formula (2) can be used as a positive electrode active material of the positive electrode 1 in molten salt batteries containing a molten salt as an electrolyte. The metal oxide has lower reactivity than molten Na. Thus the molten salt battery of the present invention containing the metal oxide as the positive electrode active material is highly safe compared to sodium-sulfur batteries containing molten Na in the positive electrode.

The positive electrode active material in the present invention is desirably, for example, any one of Na_{2/3}Fe_{1/3}Mn_{2/3}O₂, Na_{5/6}Fe_{1/2}Mn_{1/2}O₂, NaFe_{1/2}Ti_{1/2}O₂ and NaNi_{1/2}Mn_{1/2}O₂. In the present invention, the positive electrode active material is particularly preferably Na_{5/6}Fe_{1/2}Mn_{1/2}O₂. When the positive electrode active material is Na_{5/6}Fe_{1/2}Mn_{1/2}O₂, the reduction in the capacity of the molten salt battery can be lowered after multiple cycles of charge and discharge. Thus by using Na_{5/6}Fe_{1/2}Mn_{1/2}O₂ as the positive electrode active material, the molten salt battery can be obtained which has excellent cycle characteristics of charge and discharge and a high energy density.

The positive electrode material 12 contains a conductivity enhancer such as carbon. The positive electrode material 12 is prepared by mixing the positive electrode active material, the conductivity enhancer and a binder powder. The positive electrode material 12 is fixed to the positive electrode current collector 11. The positive electrode material 12 may contain two or more types of positive electrode active materials.

### EXAMPLES

The embodiment is now further specifically described with Examples and Comparative Examples.

### (Example 1)

A molten salt battery containing Na_{2/3}Fe_{1/3}Mn_{2/3}O₂ as a positive electrode active material was studied for charge and discharge characteristics thereof. Starting materials, Na₂O₂ (sodium peroxide), α-Fe₂O₃ (α-iron(III) oxide) and Mn₂O₃ (manganese(III) oxide) were used to prepare the positive electrode active material, Na_{2/3}Fe_{1/3}Mn_{2/3}O₂. Specifically, 2.98 g of Na₂O₂ (from Wako Pure Chemical Industries, Ltd., purity: minimum 85%), 3.00 g of α-Fe₂O₃ (from Wako Pure Chemical Industries, Ltd., purity: 99.9%) and 5.93 g of Mn₂O₃ (from Wako Pure Chemical Industries, Ltd., purity: 99%) were mixed and molded in a glovebox to prepare a plurality of pellets. Each pellet had a mass of about 5 g. The molding pressure was 64 kg/cm². The pellets were sintered in air at a temperature of 900°C for 12 hours to obtain Na_{2/3}Fe_{1/3}Mn_{2/3}O₂. The chemical reaction formula for production of Na_{2/}Fe_{1/3}Mn_{2/3}O₂ is represented by the following formula (3).

4Na₂O₂ + 2Fe₂O₃ + 4Mn₂O₃ → 12Na_{2/3}Fe_{1/3}Mn_{2/3}O₂ + O₂ (3)

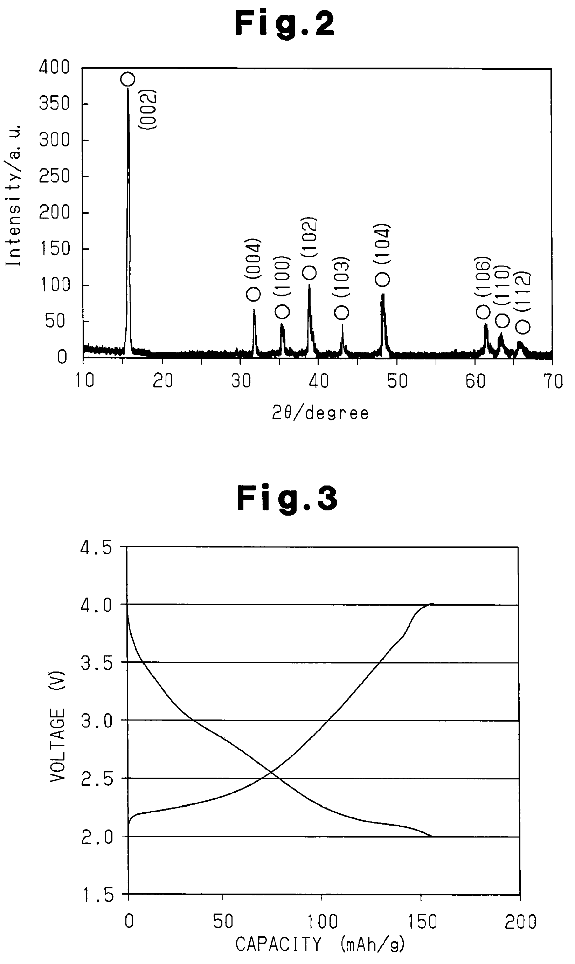

The obtained Na_{2/3}Fe_{1/3}Mn_{2/3}O₂ was verified by XRD (X-ray diffraction). The horizontal axis in Fig. 2 represents two-fold of the angle of incidence and the vertical axis represents the diffraction intensity with a.u. (arbitrary unit). As shown in Fig. 2, the X-ray diffraction pattern characteristic to Na_{2/3}Fe_{1/3}Mn_{2/3}O₂ was generated, verifying the production of Na_{2/3}Fe_{1/3}Mn_{2/3}O₂.

Next, a molten salt battery containing the above Na_{2/3}Fe_{1/3}Mn_{2/3}O₂ as a positive electrode active material was prepared. The electrolyte used was a mixed salt between NaFSA and KFSA which are molten salts. The molar ratio between NaFSA and KFSA was NaFSA : KFSA = 45 : 55. The melting point of the electrolyte was 57°C. The prepared molten salt battery was studied for charge and discharge characteristics thereof. Charge-discharge test was carried out for the molten salt battery under the conditions of an operation temperature of 80°C, a charge-discharge rate of 12 mA/g, a charge initiation voltage of 2.0 V and a discharge initiation voltage of 4.0 V.

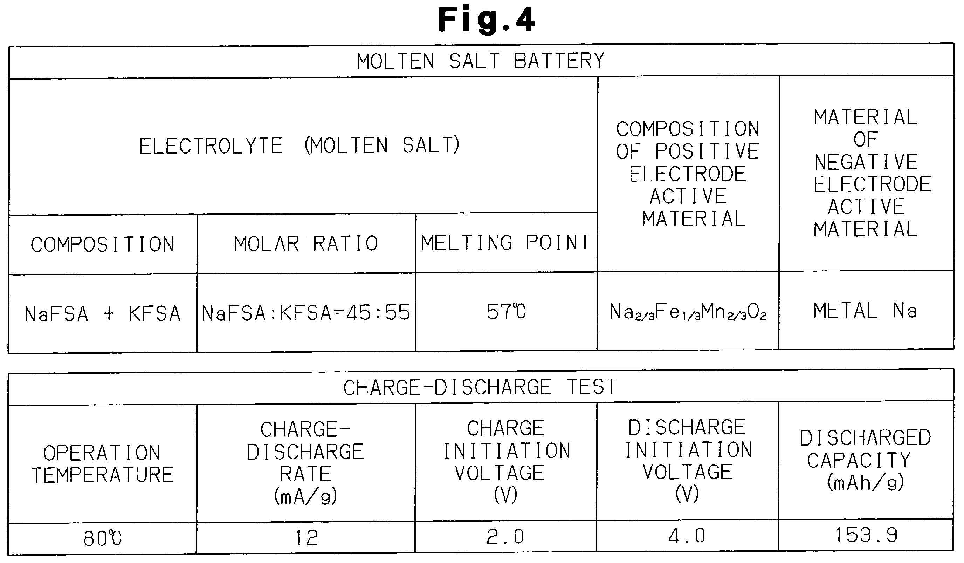

The horizontal axis in Fig. 3 represents the capacity and the vertical axis represents the voltage of the molten salt battery. The upward-sloping curve in Fig. 3 represents the charge characteristic and the downward-sloping curve represents the discharge characteristic. As shown in Fig. 3, it is apparent that charge and discharge were actually carried out under the conditions of a charge initiation voltage of 2.0 V and a discharge initiation voltage of 4.0 V. The discharged capacity obtained in this charge-discharge test was 153.9 mAh/g. As shown in the characteristic diagram of Fig. 3 and the table in Fig. 4, the molten salt battery of Example 1 can charge and discharge at an operation temperature of 80°C and has sufficient battery performance.

As described above, the present invention allows significant reduction in the operation temperature of the molten salt battery compared to the operation temperature of sodium-sulfur batteries, 280°C or more. Namely the molten salt battery operates at a low temperature and thus has a reduced time required for increasing the temperature of the battery to the operable temperature. Therefore the molten salt battery has improved convenience. Energy required for operation of the molten salt battery is also reduced, resulting in improved energy efficiency of the battery. In the present invention, the positive electrode active material is the metal oxide that has lower reactivity than molten Na, and thus the molten salt battery has a reduced operation temperature and improved safety. The molten salt battery of the present invention contains the electrolyte which is the nonvolatile and nonflammable molten salt. Therefore the molten salt battery has improved safety compared to conventional lithium-ion secondary batteries and sodium-ion secondary batteries which contain volatile and flammable electrolyte solutions. Thus according to the present invention a highly safe electric storage device can be provided. Moreover according to the present invention the molten salt battery can be obtained which has excellent cycle characteristics of charge and discharge and a high energy density. Thus the electric storage device having a high energy density and a high efficiency can be provided.

The invention will now be described with reference to the following numbered clauses:
1. A molten salt battery comprising a positive electrode, a negative electrode and a molten salt as an electrolyte, wherein:
   the molten salt contains an anion having a chemical structure represented by the following formula (1): 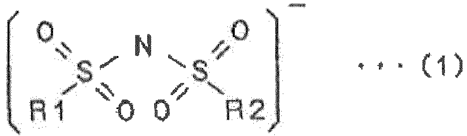
   wherein in the formula (1) R1 and R2 are the same or different and are respectively a fluoro group or a fluoralkyl group); and
   as cations, Na ion and an alkali metal ion other than Na ion or an alkaline earth metal ion, and
   the positive electrode contains, an active material, a metal oxide represented by a composition formula: NaₓM1_{y}M_{2-y}O₂, (wherein M1 is Fe or Ni, M2 is Mn orTi, x is a number satisfying 0 < x ≤ 1 and y is a number satisfying 0 < y < 1).
2. The molten salt battery according to clause 1, wherein in the formula (1), R1 and R2 are respectively a fluoro group or a fluoroalkyl group having 1 to 8 carbon atoms.
3. The molten salt battery according to clause 1 or 2, wherein the anion contained in the molten salt is FSA (bis(fluorosulfonyl)amide) ion, TFSA (bis(trifluoromethylsulfonyl)amide) ion or FTA (fluoro(trifluoromethylsulfonyl)amide) ion.
4. The molten salt battery according to any one of clauses 1 to 3, wherein the cations contained in the molten salt are Na ion and K ion.
5. The molten salt battery according to clause 1 or 2, wherein the molten salt is a mixed salt between NaFSA in which the cation is Na ion and the anion is FSA ion; and KFSA in which the cation is K ion and the anion is FSA ion.
6. The molten salt battery according to any one of clauses 1 to 5, wherein the metal oxide is represented by a composition formula: Na_{2/3}Fe_{1/3}Mn_{2/3}O2, Na_{5/6}Fe_{1/2}Mn_{1/2}O₂, NaFe_{1/2}Ti_{1/2}O₂ or NaNi_{1/2}Mn_{1/2}O₂.
7. The molten salt battery according to any one of clauses 1 to 6, further comprising a separator provided between the positive and negative electrodes,
   wherein the separator is formed of a silicate glass or a resin.
8. The molten salt battery according to clause 7, wherein the separator is formed of a glass cloth or a porous resin.
9. The molten salt battery according to any one of clauses 1 to 8, wherein the negative electrode contains, as an active material, tin, metal Na, carbon, silicon or indium.
10. The molten salt battery according to any one of clauses 1 to 9, further comprising a container formed of aluminum and configured to retain the positive and negative electrodes.

## Claims

1. A molten salt battery comprising a battery case, a positive electrode, a separator, a negative electrode and a molten salt as an electrolyte, the positive electrode, the negative electrode and the separator being impregnated with the molten salt, wherein:
the molten salt contains an anion having a chemical structure represented by a following formula (1): 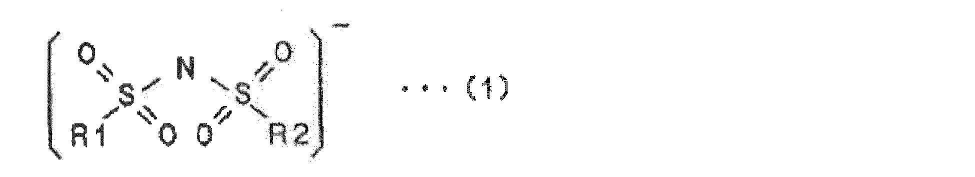
wherein in the formula (1) R1 and R2 are a fluoro group;
as cations, Na ion and K ion;
the molten salt is a mixed salt between NaFSA in which the cation is Na ion and the anion is FSA ion, and KFSA in which the cation is K ion and the anion is FSA ion, FSA ion being bis(fluorosulfonyl)amide ion; and
the positive electrode contains, as active material, a metal oxide represented by a composition formula: NaₓM1_{y}M₂₁-_{y}O₂, wherein M1 is Fe or Ni, M2 is Mn or Ti, x is a number satisfying 0 < x ≤ 1 and y is a number satisfying 0 < y < 1, **characterised in that**:
the battery case is provided with an elastic body; and
when the positive electrode or the negative electrode is expanded or shrunk due to charge and discharge, the change in the volume of the positive electrode or the negative electrode is absorbed by expansion and contraction of the elastic body.

2. The molten salt battery according to claim 1 wherein the metal oxide is represented by a composition formula:
Na_{2/3}Fe_{1/3}Mn_{2/3}O₂, Na_{5/6}Fe_{1/2}Mn_{1/2}O₂, NaFe_{1/2}Ti_{1/2}O₂ or NaNi_{1/2}Mn_{1/2}O₂.

3. The molten salt battery according to claim 1 or claim 2, wherein the separator is provided between the positive and negative electrodes, and
wherein the separator is formed of a silicate glass or a resin.

4. The molten salt battery according to claim 3, wherein the separator is formed of a glass cloth or a porous resin.

5. The molten salt battery according any one of claims 1 to 4, wherein the negative electrode contains, as an active material, tin, metal Na, carbon, silicon or indium.

6. The molten salt battery according any one of claims 1 to 5, further comprising a container formed of aluminium and configured to retain the positive and negative electrodes.
